# EUROPÄISCHE PATENTSCHRIFT

(11) **EP 2 150 807 B1**
(45) Veröffentlichungstag und Bekanntmachung des Hinweises auf die Patenterteilung: **02.07.2014**
(21) Anmeldenummer: 07765302.0
(22) Anmeldetag: 31.05.2007
(51) Int. Cl.: H01F 17/00, H01F 17/06, G01N 27/02

(54) **INDUKTIVER LEITFÄHIGKEITSSENSOR**
INDUCTIVE CONDUCTIVITY SENSOR
CAPTEUR DE CONDUCTIVITÉ INDUCTIF

(43) Veröffentlichungstag der Anmeldung: 10.02.2010
(73) Patentinhaber: Endress+Hauser Conducta Gesellschaft für Mess- und Regeltechnik mbH+Co. KG, 70839 Gerlingen (DE)
(72) Erfinder: PECHSTEIN, Torsten, 01445 Radebeul (DE); EBERHEIM, Andreas, 04736 Waldheim (DE); VÖLKER, Marco, 76185 Karlsruhe (DE)
(74) Vertreter: Andres, Angelika Maria
(86) Internationale Anmeldenummer: PCT/EP2007/055331
(87) Internationale Veröffentlichungsnummer: WO 2008/145188

(56) Entgegenhaltungen:
- EP-A- 0 999 441
- WO-A-2007/024322
- DE-A1- 10 334 830
- DE-A1-102005 014 929
- DE-A1-102006 025 194
- US-A- 3 603 873
- US-A1- 2004 179 383
- US-A1- 2006 227 518

## Beschreibung

Die vorliegende Erfindung betrifft einen induktiven Leitfähigkeitssensor.

Induktive Leitfähigkeitssensoren zum Bestimmen der elektrischen Leitfähigkeit eines Mediums umfassen im wesentlichen zwei vom Medium umgebene Toroidspulen, die eine durchgehende Öffnung für das Medium umschließen und gewöhnlich koaxial angeordnet sind, wobei eine erste der Spulen als Erregerspule einen Strom in dem Medium induziert, der von der zweiten Spule erfasst wird. Das Prinzip an sich ist in der industriellen Prozessmesstechnik etabliert und in einer Vielzahl von Schriften in der Patentliteratur dokumentiert, beispielsweise in US Patent No. 3,603,873, oder der deutschen Offenlegungsschrift DE 198 51 146 A1.

Die WO 2007/024322 zeigt Toroidspulen, die in einer zweilagigen Leiterplatte eingebettet sind. Die Leiterplatte umfasst eine Masselage und die Spulenwicklungen werden aus Leiterbahnen auf einem ersten Substrat und Leiterbahnen auf einem zweiten Substrat gebildet, wobei Verbindungen zur Rückseite der Leiterplatte mittels Durchgangsbohrungen gebildet werden. Das Spulenpaar wird dann im Medium in engem Abstand gehalten. Somit wird die Toroidspule mit einem Kern aus dielektrischem Material gebildet.

Aufgabe der Erfindung ist es einen induktiven Leitfähigkeitssensor mit verbesserter Empfindlichkeit bereitzustellen. Die Empfindlichkeit der induktiven Leitfähigkeitssensoren steigt einerseits mit zunehmender Querschnittsfläche der Öffnung die von den Toroidspulen umschlossen ist, und nimmt andererseits ab mit zunehmender axialer Länge der Öffnung, da die Pfadlänge für den durch die Spule induzierten Ringstrom im Medium mit der axialen Länge ansteigt. Die Querschnittsfläche der Öffnung kann jedoch bei gegebener Spulenbauweise nicht beliebig vergrößert werden, ohne die gesamte Baugröße des Leitfähigkeitssensors zu vergrößern. Insoweit ist es zur Verbesserung der Empfindlichkeit erstrebenswert, die axiale Länge der Öffnung zu reduzieren. Die Aufgabe wird daher erfindungsgemäß gelöst durch den Leitfähigkeitssensor gemäß Anspruch 1.

Hierzu stellt die Erfindung einen induktiven Leitfähigkeitssensor mit einem neuartigen Spulenaufbau bereit, der eine besonders geringe axiale Baulänge für den Leitfähigkeitssensor ermöglicht. Gemäß eines weiteren Gesichtspunkts der Erfindung ermöglicht der neuartige Spulenaufbau eine vereinfachte automatisierte Fertigung.

Der erfindungsgemäße induktive Leitfähigkeitssensor zum Messen der Leitfähigkeit eines Mediums umfasst

eine erste Toroidspule, welche eine durchgehende Öffnung umschließt, zum Induzieren eines Ringstroms in einem Medium und eine zweite Toroidspule, welche die durchgehende Öffnung umschließt, zum Erfassen des durch den Ringstrom erzeugten Magnetfelds, wobei mindestens eine der Toroidspulen eine Vielzahl erster Leiterabschnitte aufweist, die in einer Ebene einer mehrlagigen Leiterkarte verlaufen, und eine Vielzahl zweiter Leiterabschnitte die in einer zweiten Ebene der Leiterkarte verlaufen, und eine Vielzahl von Durchkontaktierungen, welche die ersten Leiterabschnitte mit den zweiten Leiterabschnitten verbinden, wobei die ersten Leiterabschnitte, die zweiten Leiterabschnitte und die Durchdurchkontaktierungen zusammen die Windungen der Toroidspule ausbilden, und wobei auf der Leiterkarte elektronische Schaltungen zum Betreiben des Leitfähigkeitssensors vorgesehen sind.

Die Durchkontaktierungen verlaufen in einer derzeit bevorzugten Ausgestaltung der Erfindung im wesentlichen senkrecht zu den Lagen der Leiterkarte.

Die ersten bzw. zweiten Leiterabschnitte können jeweils als Leiterbahnen an einer äußeren Oberfläche der Leiterkarte oder in einer Zwischenlage in der Leiterkarte ausgebildet sein.

Die Toroidspule kann als Luftspule oder als Ringkemspule ausgebildet sein, wobei der Ringkern beispielsweise in einer entsprechenden Aussparung in der Leiterkarte zwischen der ersten und der zweiten Ebene angeordnet ist.

Der Ringkern kann beispielsweise einen massiven Ringkern, einen gewickelten Ringbandkern oder einen Kunststoffringkem mit magnetischen Partikeln umfassen. Der Ringkern kann beispielsweise bei der Fertigung der Leiterplatte in die dafür vorgesehen Aussparung eingebettet bzw. einlaminiert

werden, oder im Falle des Kunststoffringkerns auch nach der Fertigung der Leiterplatte In dafür vorgesehene Aussparungen eingespritzt werden.

In einer derzeit bevorzugten Ausgestaltung der Erfindung sind beide Toroidspulen in der zuvor beschriebenen Weise aufgebaut.

Die beiden Spulen können beispielsweise koaxial und axial hintereinander angeordnet oder koaxial und koplanar angeordnet sein, wobei in der zweiten Alternative die Spulen unterschiedliche Radien aufweisen. Die Spulen sind vorzugsweise mit den üblichen Schirmungsmitteln magnetisch und kapazitiv voneinander geschirmt.

Zumindest der von dem Medium benetzbare Teil des Sensors kann beispielsweise mit einer isolierenden Schutzschicht, insbesondere einer Kunststoffschicht überzogen sein, um die Leiterkarte und die Spulen vor direktem Medienkontakt zu schützen.

Die Erfindung wird nun anhand der in den Zeichnungen dargestellten Ausführungsbeispiele erläutert. Es zeigt:
- Fig. 1:: einen Längsschnitt durch eine Leiterkarte mit einer Toroidspule gemäß einer Ausgestaltung der Erfindung.
- Fig. 2:: eine Aufsicht auf verschiedene Ebenen der Leiterkarte aus Fig. 1.
- Fig. 3:: einen Längsschnitt durch ein erstes Ausführungsbeispiel eines Sensorkopfs eines erfindungsgemäßen Leitfähigkeitssensors; und
- Fig. 4:: einen Längsschnitt durch ein zweites Ausführungsbeispiel eines Sensorkopfs eines erfindungsgemäßen Leitfähigkeitssensors.

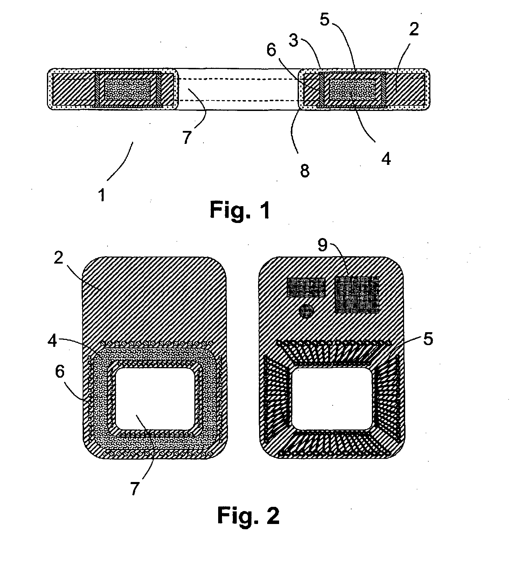

Fig. 1 zeigt einen Längsschnitt eine Spulenanordnung 1 für einen Leitfähigkeitssensor in einer mehrlagigen Leiterkarte 2. Eine Aufsicht auf verschiedene Lagen dieser mehrlagigen Leiterplatte 2 der Spulenanordnung ist in Fig. 2 dargestellt, wobei das linke Teilbild eine Zwischenlage zeigt, und das rechte Teilbild eine Decklage. Die Spulenanordnung wird nun unter Verweis auf Fign. 1 und 2 erläutert.

Die Spulenanordnung 1 umfasst eine Toroidspule 3, welche eine durchgehende Öffnung 7 in der Leiterkarte 2 ringförmig umgibt. Die Toroidspule 3 umfasst erste Leiterabschnitte 5 die auf der Oberseite der Decklage der verlaufen, und zweite Leiterabschnitte die auf der Unterseite einer Basislage der Leiterplatte verlaufen. Zwischen der Basislage und der Decklage ist eine Zwischenlage angeordnet, die selbst eine oder mehrere Lagen umfassen kann. Die Zwischenlage umfasst eine Aussparung in der ein Ringbandkern 4 für die Toroidspule 3 eingesetzt wird, bevor die Decklage mit der Zwischenlage gefügt wird. Die ersten Leiterabschnitte 5 und die zweiten Leiterabschnitte werden über Durchkontaktierungen durch die Lagen der Leiterplatte miteinander kontaktiert, so dass die ersten Leiterabschnitte, die zweiten Leiterabschnitte, und die Durchkontaktierungen zusammen die umlaufenden Windungen der Toroidspule bilden, die den Ringbandkern 4 umschließt.

Zum Schutz gegen Messmedien, weist die Spulenanordnung 1 im benetzbaren Bereich eine Kunststoffschutzschicht 8 auf, welche vorzugsweise sämtliche Oberflächen der Spulenanordnung 1 im benetzbaren Bereich vollständig überdeckt.

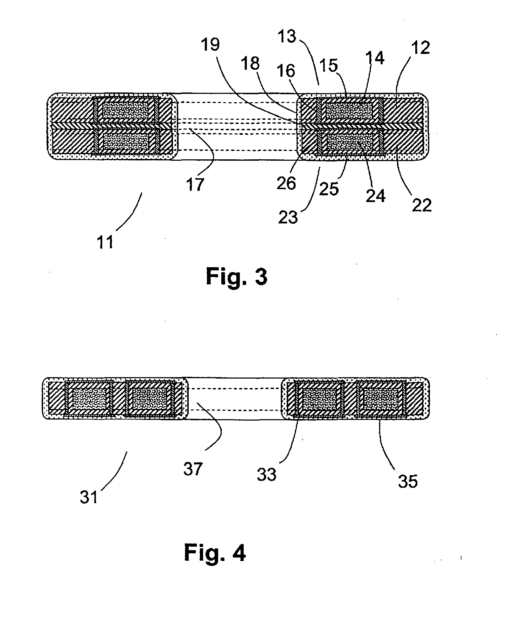

Der Sensorkopf 11 gemäß Fig. 3 umfasst eine erste Toroidspule 13 und eine zweite Toroidspule 23, die entsprechend der im Zusammenhang mit Fig. 1 erläuterten Weise aufgebaut sind, wobei die Spulen koaxial und axial hintereinander angeordnet sind. Die Toroidspulen 13, 23 umfassen jeweils erste und zweite Leiterabschnitte 15, 25, die über Durchkontaktierungen 16, 26 durch Teillagen 12, 22 der Leiterkarte miteinander kontaktiert sind, um jeweils die umlaufenden Windungen der ersten bzw. zweiten Toroidspule auszubilden, wobei die beiden Toroidspulen voneinander elektrisch isoliert sind. Zwischen den beiden Spulen verläuft weiterhin eine Trennlage 19, die eine oder mehrere Teillagen umfassen kann, beispielsweise auch Schirmungslagen zur Entkopplung der Spulen. In Aussparungen in den Zwischenlagen ist jeweils ein Ringkem 14, 24 angeordnet, der von einer der Toroidspulen 13, 23 umschlossen ist.

Der benetzbare Teil des Sensorkopfes 11 ist wie zuvor mit einer Kunststoffschutzschicht 18 überzogen.

Der Sensorkopf 31 in Fig. 4 weist zwei koaxial und koplanar angeordnete Toroidspulen 33, 34 auf, die eine durchgehende Öffnung 37 umgeben. Der Aufbau der Spulen entspricht den obigen Ausführungen.

Die erfindungsgemäßen Leitfähigkeitssensoren zeichnen sich im Ergebnis durch einen flachen Aufbau und damit durch erhöhte Empfindlichkeit aus. Zudem sind sie automatisiert mit gängigen Methoden der Leiterkartentechnologie zu fertigen.

## Patentansprüche

1. Leitfähigkeitssensor zum Messen der Leitfähigkeit eines Mediums, welches den Leitfähigkeitssensor umgibt, umfassend:
eine erste Toroidspule (13; 33), welche eine mit dem Medium beaufschlagbare durchgehende Öffnung (17; 37) umschließt, zum induzieren eines Stroms in dem Medium und eine zweite Toroidspule (23; 35), welche die durchgehende Öffnung (17; 37) umschließt, zum Erfassen eines durch den Strom erzeugten Magnetfelds, wobei mindestens eine der Toroidspulen (13, 23; 33, 35) eine Vielzahl erster Leiterabschnitte (15; 25) aufweist, die in einer Ebene einer mehrlagigen Leiterkarte (12; 22) verlaufen, und eine Vielzahl zweiter Leiterabschnitte die in einer zweiten Ebene der Leiterkarte (12, 22) verlaufen, und eine Vielzahl von Durchkontaktierungen (16, 26), welche die ersten Leiterabschnitte (15; 25) mit den zweiten Leiterabschnitten verbinden, wobei die ersten Leiterabschnitte (15, 25), die zweiten Leiterabschnitte und die Durchkontaktierungen (16, 26) zusammen die Windungen einer Toroidspule (13, 23) ausbilden, und wobei auf der Leiterkarte elektronische Schaltungen zum Betreiben des Leitfähigkeitssensors vorgesehen sind.

2. Leitfähigkeitssensor nach Anspruch 1, wobei die Durchkontaktierungen im wesentlichen senkrecht zu den Lagen der Leiterkarte verlaufen.

3. Leitfähigkeitssensor nach Anspruch 1 oder 2, wobei die ersten bzw. zweiten Leiterabschnitte jeweils als Leiterbahnen an einer äußeren Oberfläche der Leiterkarte oder einer Zwischenlage in der Leiterkarte ausgebildet sind.

4. Leitfähigkeitssensor nach einem der Ansprüche 1 bis 3, wobei mindestens eine der Toroidspulen eine Luftspule umfasst.

5. Leitfähigkeitssensor nach einem der Ansprüche 1 bis 3, wobei mindestens eine der Toroidspulen eine Ringkernspule umfasst.

6. Leitfähigkeitssensor nach Anspruch 6, wobei der Ringkern in einer Aussparung in der Leiterkarte zwischen der ersten und der zweiten Ebene angeordnet ist.

7. Leitfähigkeitssensor nach Anspruch 5 oder 6, wobei der Ringkern, einen massiven Ringkern, einen gewickelten Ringbandkern oder einen Kunststoffringkern mit magnetischen Partikeln umfasst

8. Leitfähigkeitssensor nach einem der vorhergehenden Ansprüche, wobei beide Toroidspulen jeweils eine Vielzahl erster Leiterabschnitte (15; 25) aufweisen, die in einer Ebene einer mehrlagigen Leiterkarte (12; 22) verlaufen, und eine Vielzahl zweiter Leiterabschnitte die in einer zweiten Ebene der Leiterkarte (12, 22) verlaufen, und eine Vielzahl von Durchkontaktierungen (16, 26), welche die ersten Leiterabschnitte (15; 25) mit den zweiten Leiterabschnitten verbinden, wobei die ersten Leiterabschnitte (15, 25), die zweiten Leiterabschnitte und die Durchkontaktierungen (16, 26) zusammen jeweils die Windungen der beiden Toroidspulen (13, 23) ausbilden.

9. Leitfähigkeitssensor nach einem der vorhergehenden Ansprüche, wobei die erste und die zweite Toroidspule koaxial axial hintereinander angeordnet sind.

10. Leitfähigkeitssensor nach einem der vorhergehenden Ansprüche, wobei die erste und die zweite Toroidspule koaxial und koplanar angeordnet sind.

## Claims

1. Conductivity sensor designed to measure the conductivity of a medium which surrounds said conductivity sensor, comprising:
a first toroidal coil (13, 33), which surrounds a continuous opening (17, 37) that can be subject to the medium, designed to induce a current in the medium and a second toroidal coil (23, 35), which surrounds the continuous opening (17, 37), designed to detect a magnetic field generated by the current, wherein at least one of the toroidal coils (13, 23 ; 33, 35) has a multitude of first conductor segments (15, 25), which extend in a plane of a multi-layer printed circuit board (12, 22), and a multitude of second conductor segments which extend in a second plane of the printed circuit board (12, 22), and a multitude of vias (16, 26) which connect the first conductor segments (15, 25) to the second conductor segments, wherein the first conductor segments (15, 25), the second conductor segments and the vias (16, 26) together make up the windings of a toroidal coil (13, 23), and wherein electronic circuits are provided on the printed circuit board to operate the conductivity sensor.

2. Conductivity sensor as claimed in Claim 1, wherein the vias (16, 26) extend essentially perpendicular to the layers of the printed circuit board.

3. Conductivity sensor as claimed in Claim 1 or 2, wherein the first or second conductor segments are formed in each case as conducting paths on an outer surface of the printed circuit board or on an intermediate layer in the printed circuit board.

4. Conductivity sensor as claimed in one of the Claims 1 to 3, wherein at least one toroidal coils comprises an air coil.

5. Conductivity sensor as claimed in one of the Claims 1 to 3, wherein at least one of the toroidal coils comprises a toroidal core coil.

6. Conductivity sensor as claimed in Claim 5, wherein the toroidal core is arranged in a recess in the printed circuit board between the first and second planes.

7. Conductivity sensor as claimed in Claim 5 or 6, wherein the toroidal core comprises a solid toroidal core, a toroidal tape wound core or a plastic toroidal core with magnetic particles.

8. Conductivity sensor as claimed in one of the previous claims, wherein both toroidal coils each has a multitude of first conductor segments (15, 25) which extend in a plane of a multi-layer printed circuit board (12, 22), and a multitude of second conductor segments which extend in a second plane of the printed circuit board (12, 22), and a multitude of vias (16, 26), which connect the first conductor segments (15, 25) to the second conductor segments, wherein the first conductor segments (15, 25), the second conductor segments and the vias (16, 26) together form the windings of the two toroidal coils (13, 23).

9. Conductivity sensor as claimed in one of the previous claims, wherein the first and second toroidal coil are arranged in a coaxial manner, one after one another in an axial direction.

10. Conductivity sensor as claimed in one of the previous claims, wherein the first and second toroidal coil are arranged in a coaxial and coplanar manner.

## Revendications

1. Capteur de conductivité destiné à la mesure de la conductivité d'un produit, lequel entoure le capteur de conductivité, comprenant :
une première bobine toroïdale (13, 33), laquelle enferme une ouverture (17, 37) ininterrompue pouvant être alimentée par le produit, destinée à induire un courant dans le produit et une deuxième bobine toroïdale (23, 35), laquelle enferme l'ouverture (17, 37) ininterrompue, destinée à la détection d'un champ magnétique généré par le courant, au moins l'une des bobines toroïdales (13, 23 ; 33, 35) présentant un grand nombre de segments conducteurs (15, 25), qui s'étendent dans un plan d'une carte de circuit imprimé multicouche (12, 22), et un grand nombre de segments conducteurs, qui s'étendent dans un deuxième plan de la carte de circuit imprimé (12, 22), et un grand nombre de trous de traversée métalliques (16, 26), qui relient les premiers segments conducteurs (15, 25) avec les deuxièmes segments conducteurs, les premiers segments conducteurs (15, 25), les deuxièmes segments conducteurs et les trous de traversée métalliques (16, 26) constituant ensemble les spires d'une bobine toroïdale (13, 23), et des circuits électroniques étant prévus sur la carte de circuit imprimé, destinés à l'exploitation du capteur de conductivité.

2. Capteur de conductivité selon la revendication 1, pour lequel les trous de traversée métalliques s'étendent pour l'essentiel perpendiculairement aux couches de la carte de circuit imprimé.

3. Capteur de conductivité selon la revendication 1 ou 2, pour lequel les premiers ou les deuxièmes segments conducteurs sont conçus respectivement comme pistes conductives sur une surface extérieure de la carte de circuit imprimé ou une couche intermédiaire dans la carte de circuit imprimé.

4. Capteur de conductivité selon la revendication 1 à 3, pour lequel au moins l'une des bobines toroïdales est une bobine à air.

5. Capteur de conductivité selon la revendication 1 à 3, pour lequel au moins l'une des bobines toroïdales comprend une bobine à tore magnétique.

6. Capteur de conductivité selon la revendication 5, pour lequel le tore magnétique est disposé dans un évidement réalisé dans la carte de circuit imprimé, entre le premier et le deuxième plan.

7. Capteur de conductivité selon la revendication 5 ou 6, pour lequel le tore magnétique comprend un tore magnétique massif, un tore enroulé ou un tore magnétique en plastique avec des particules magnétiques.

8. Capteur de conductivité selon l'une des revendications précédentes, pour lequel les deux bobines toroïdales présentent chacune un grand nombre de premiers segments conducteurs (15, 25), qui s'étendent dans un plan d'une carte de circuit imprimé multicouche (12, 22), et un grand nombre de deuxièmes segments conducteurs, qui s'étendent dans un deuxième plan de la carte de circuit imprimé (12, 22), et un grand nombre de trous de traversée métalliques (16, 26), lesquels relient les premiers segments conducteurs (15, 25) avec les deuxièmes segments conducteurs, les premiers segments conducteurs (15, 25) constituant conjointement avec les deuxièmes segments conducteurs et les trous de traversée métalliques (16, 26) les spires des deux bobines toroïdales (13, 23).

9. Capteur de conductivité selon l'une des revendications précédentes, pour lequel la première et la deuxième bobine toroïdale sont disposées de façon coaxiale, l'une derrière l'autre dans la direction axiale.

10. Capteur de conductivité selon l'une des revendications précédentes, pour lequel la première et la deuxième bobine toroïdale sont disposées de façon coaxiale et coplanaire.
